# EUROPEAN PATENT SPECIFICATION

(11) **EP 3 863 326 B1**
(45) Date of publication and mention of the grant of the patent: **10.12.2025**
(21) Application number: 19878829.1
(22) Date of filing: 28.10.2019
(51) Int. Cl.: H04L 69/324, H04L 69/22

(54) **DATA COMMUNICATION METHOD AND RELATED DEVICE**
DATENKOMMUNIKATIONSVERFAHREN UND ZUGEHÖRIGE VORRICHTUNG
PROCÉDÉ DE COMMUNICATION DE DONNÉES ET DISPOSITIF ASSOCIÉ

(30) Priority: 30.10.2018 CN 201811279772
(43) Date of publication of application: 11.08.2021
(73) Proprietor: Huawei Technologies Co., Ltd., Shenzhen, Guangdong 518129 (CN)
(72) Inventor: WU, Weimin, Wuhan, Hubei 430074 (CN); CHEN, Xin, Wuhan, Hubei 430074 (CN); YU, Jian, Shenzhen, Guangdong 518129 (CN)
(74) Representative: Gill Jennings & Every LLP
(86) International application number: PCT/CN2019/113762
(87) International publication number: WO 2020/088421

(56) References cited:
- CN-A- 102 595 494
- CN-A- 102 752 797
- CN-A- 106 304 186
- CN-A- 106 797 294
- US-A1- 2005 220 145
- US-A1- 2006 268 878
- US-A1- 2009 285 192
- US-A1- 2013 259 036
- US-A1- 2017 099 119

## Description

### TECHNICAL FIELD

This application relates to the field of communications technologies, and in particular, to a data communication method and a related apparatus.

### BACKGROUND

In a wireless system, an access point (access point, AP) and a station (station, STA) transmit control signaling, management signaling, or data by using a medium access control protocol data unit (medium access control protocol data unit, MPDU) that is also referred to as a medium access control (medium access control, MAC) frame for short. One MPDU includes a frame header and a frame body. In some scenarios or when some functions need to be implemented, for example, in a scenario with a relatively high transmission reliability requirement, the MPDU frame header usually needs to be separately checked, and the MPDU frame header needs to have relatively good reliability.

For this, in a related technology, the MPDU frame header is used as an independent field, and a relatively reliable coding and modulation mode is used. Another part including the MPDU frame body is separately encoded. In addition, during data transmission, the MPDU frame header and the MPDU frame body are carried on a same resource for sending.

However, this data transmission manner causes low transmission efficiency.

US 2006/268878 A1 discloses an apparatus and a method for transmitting and receiving a multi-user packet in a mobile communication system.

US 2005/220145 A1 discloses a communication apparatus, communication system, communication method, and communication control program

US 2013/259036 A1 discloses techniques for forwarding or receiving data segments associated with a large data packet.

US 2017/099119A1 discloses methods, systems, and apparatuses for generating an error-check on the header of a medium access control protocol data unit.

### SUMMARY

This application provides a data communication method and a related apparatus, to resolve a problem in a related technology. The invention is defined in the appended independent claims. Further specific embodiments of the invention are defined in the dependent claims.

### BRIEF DESCRIPTION OF DRAWINGS

FIG. 1 is a schematic diagram of an implementation scenario according to an embodiment of this application;
FIG. 2 is a schematic structural diagram of data communication apparatus according to an embodiment of this application;
FIG. 3 is a flowchart of a data communication method according to an embodiment of this application;
FIG. 4 is a schematic diagram of transmission of an MPDU according to an embodiment of this application;
FIG. 5 is a schematic diagram of a format of frame header information according to an embodiment of this application;
FIG. 6 is a schematic diagram of a format of a frame control field according to an embodiment of this application;
FIG. 7 is a schematic diagram of a format of frame header information according to an embodiment of this application;
FIG. 8 is a schematic diagram of a format of frame body information according to an embodiment of this application;
FIG. 9 is a schematic diagram of a format of frame body information according to an embodiment of this application;
FIG. 10 is a schematic diagram of a format of frame body information according to an embodiment of this application;
FIG. 11 is a schematic diagram of a separation manner according to an embodiment of this application;
FIG. 12 is a schematic diagram of a separation manner according to an embodiment of this application;
FIG. 13 is a schematic diagram of a separation manner according to an embodiment of this application;
FIG. 14 is a schematic diagram of a separation manner according to an embodiment of this application;
FIG. 15 is a schematic diagram of a separation manner according to an embodiment of this application;
FIG. 16 is a schematic diagram of a separation manner according to an embodiment of this application;
FIG. 17 is a schematic diagram of a separation manner according to an embodiment of this application;
FIG. 18 is a schematic diagram of a separation manner according to an embodiment of this application;
FIG. 19 is a schematic diagram of a separation manner according to an embodiment of this application;
FIG. 20 is a schematic diagram of a data clustering structure applicable to a HARQ according to an embodiment of this application;
FIG. 21 is a schematic structural diagram of a data communication apparatus according to an embodiment of this application;
FIG. 22 is a schematic structural diagram of a data communication apparatus according to an embodiment of this application;
FIG. 23 is a schematic structural diagram of a data communication apparatus according to an embodiment of this application;
FIG. 24 is a schematic structural diagram of a data communication apparatus according to an embodiment of this application;
FIG. 25 is a schematic structural diagram of communications equipment according to an embodiment of this application; and
FIG. 26 is a schematic structural diagram of communications equipment according to an embodiment of this application.

### DESCRIPTION OF EMBODIMENTS

Terms used in embodiments of this application are merely used to explain specific embodiments of this application, but are not intended to limit this application.

Technical solutions in the embodiments of this application may be used in various communications systems. For example, a wireless local area network (Wireless Local Area Network, WLAN) communications system. With continuous development of communications technologies, the technical solutions in this application may also be used in a future network, for example, a 5G system, which may also be referred to as a new radio (New Radio, NR) system; or may be used in a device-to-device (device to device, D2D) system, a machine-to-machine (machine to machine, M2M) system, and the like. The terms "system" and "network" may be interchanged.

In a wireless communications system such as a WLAN, an access point (Access Point, AP) and a station (Station, STA) transfer control signaling, management signaling, or data by using a medium access control protocol data unit (Medium Access Control Protocol Data Unit, MPDU) which is also referred to as a medium access control (Medium Access Control, MAC) frame for short. One MPDU includes a frame header and a frame body. The frame header carries some control information and signaling information, and is used by a receive end to parse the frame body. The frame body carries a payload. A plurality of MPDUs may be aggregated to obtain an aggregated MPDU (Aggregated MPDU, A-MPDU).

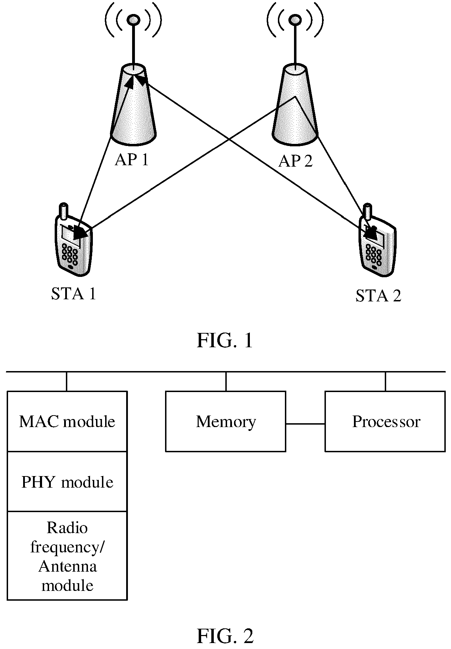

This application provides a data communication method. The method is applicable to a single MPDU and also an A-MPDU. An application scenario related to the method includes one or more nodes. The node is an AP and/or a STA, and data communication may be performed between the nodes. The WLAN is used as an example, and FIG. 1 shows an example application scenario according to an embodiment of this application. FIG. 1 shows four nodes: an AP 1, an AP 2, a STA 1, and a STA 2. The method provided in this embodiment of this application may be applied to communication between the AP 1 and the STA 1. Similarly, the method is also applicable to communication between the AP 1 and the STA 2, communication between the STA 1 and the STA 2, communication between the AP 1 and the AP 2, and communication between the AP 2 and the STA 2. The method is also applicable to a case in which the AP 1 simultaneously communicates with the STA 1 and the STA 2. Between two communication parties, a node for sending data is a transmit end, and a node for receiving data is a receive end. For example, if the STA 1 sends data to the AP 1, the STA 1 is a transmit end, and the AP 1 is a receive end. Similarly, if the AP 1 sends data to the STA 1, the AP 1 is a transmit end, and the STA 1 is a receive end. That is, in an application scenario of data communication, a node may be a transmit end, and in another application scenario of data communication, the node may alternatively be a receive end.

The receive end and the transmit end in the embodiments of this application may each be a wireless communications apparatus with wireless receiving and sending functions, for example, may be an AP supporting wireless fidelity (wireless-fidelity, Wi-Fi), or a base station in cellular communication; or may be a station supporting Wi-Fi or a terminal device supporting cellular communication such as a handheld device, a vehicle-mounted device, a wearable device, or a computing device that has a wireless communication function or another processing device connected to a wireless modem. The terminal device may have different names in different networks, for example, a terminal (terminal), user equipment (user equipment, UE for short), a mobile station, a subscriber unit, a relay (Relay), a station, a cellular phone, a personal digital assistant, a wireless modem, radio communications equipment, a handheld device, a laptop computer, a cordless phone, and a wireless local loop station.

Further, the receive end and the transmit end may be collectively referred to as data communication apparatus. As shown in FIG. 2, a structure of the data communication apparatus includes but is not limited to a MAC module, a physical layer (physical layer, PHY) module, a radio frequency/antenna module, a processor, and a memory. The MAC module is configured to: process data and information according to a MAC layer protocol, and transfer processed data and information to the PHY module or another upper-layer module (not shown in the figure). The PHY module is configured to: process, according to a PHY layer protocol, data received through the radio frequency/antenna module or the data and information transferred by the MAC module, and transfer processed data and information to the MAC module or send processed data and information through the radio frequency/antenna module. The memory is configured to store related data and signaling information, a preset value that is pre-agreed on, and the like. The processor is configured to parse the signaling information and process the related data.

Based on the foregoing application scenario, this embodiment of this application provides a data communication method. The method includes: A transmit end sends generated frame header information and frame body information of an MPDU in a separation manner to a receive end. The frame header information includes a frame header, and the frame body information includes a frame body. In addition, the frame header information includes first information used to indicate the frame body corresponding to the frame header. Although the frame header information is separated from the frame body information, the frame header and the frame body can correspond to each other, and the receive end can still find the frame body corresponding to the frame header of the MPDU, so that separated transmission of the frame header and the frame body is implemented, and transmission efficiency is improved. Moreover, the method is not only applicable to a single MPDU, but also applicable to an A-MPDU.

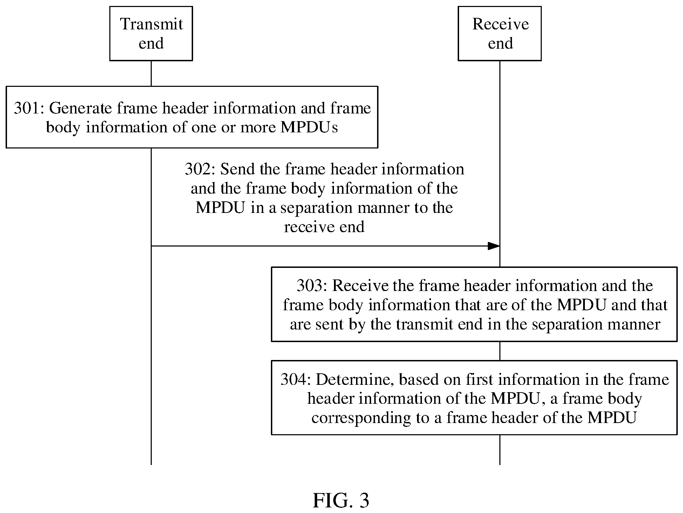

As shown in FIG. 3, according to the data communication method provided in this embodiment of this application, the method may be implemented by the transmit end and the receive end, and includes the following steps.

**In step 301, the transmit end generates frame header information and frame body information of one or more MPDUs.**

The method provided in this embodiment of this application includes a case in which there are one or more MPDUs. For a case in which there are a plurality of MPDUs, frame header information and frame body information may be generated separately for each of the plurality of MPDUs, and frame header information and frame body information of the plurality of MPDUs may be aggregated, or may not be aggregated.

In addition, for both cases of one MPDU and any one of the plurality of MPDUs, frame header information of an MPDU includes a frame header of the MPDU, frame body information of the MPDU includes a frame body of the MPDU, and the frame header of the MPDU corresponds to the frame body of the MPDU. The frame header information of the MPDU includes first information used to indicate the frame body corresponding to the frame header of the MPDU. The frame header and the frame body of the MPDU can match each other by using the first information. Further, the frame body corresponding to the frame header of the MPDU may be determined based on the first information.

Optionally, in addition to the frame body, the frame body information of the MPDU may further include second information, where the second information and the first information are combined to indicate the frame body corresponding to the frame header of the MPDU. The second information corresponds to the frame body of the MPDU. For example, the second information may be located in a field before the frame body. It should be noted that, in a case in which the receive end cannot determine, by using only the first information, the frame body corresponding to the frame header of the MPDU, the frame body corresponding to the frame header of the MPDU may be determined based on both the first information and the second information. In this case, the first information and the second information present in pair, that is, first information in frame header information is in pair with second information in corresponding frame body information, so that the receive end determines, based on the first information and the second information, a frame body corresponding to a frame header of an MPDU.

It should be noted that the frame header of the MPDU may further carry some control information and signaling information, and is used by the receive end to parse the frame body. The frame body of the MPDU carries a payload. In addition, in addition to the first information and the frame header, the frame header information of the MPDU may further include other signaling information, for example, an MPDU frame header delimiter. In addition to the second information and the frame body, the frame body information of the MPDU may further include other signaling information, for example, a transmitter address of the MPDU and an FCS. For specific content of the first information and the second information, and manners of determining the frame body based on the first information or based on both the first information and the second information, refer to a subsequent step. Details are not described herein temporarily.

**In step 302, the transmit end sends the frame header information and the frame body information of the MPDU in a separation manner to the receive end.**

The separation manner used for the frame header information and the frame body information of the MPDU includes but is not limited to the following three manners:

In the first separation manner, the frame header information and the frame body information of the MPDU are separately carried in different physical layer protocol data units (physical layer protocol data unit, PPDU).

In the second separation manner, the frame header information and the frame body information of the MPDU are carried separately in a preamble field and a data field of a same PPDU.

In the third separation manner, the frame header information and the frame body information of the MPDU are separately carried in different resource units in a data field of a same PPDU. In the third separation manner, different resource units of the data field may be different space resource units, time resource units, or frequency resource units.

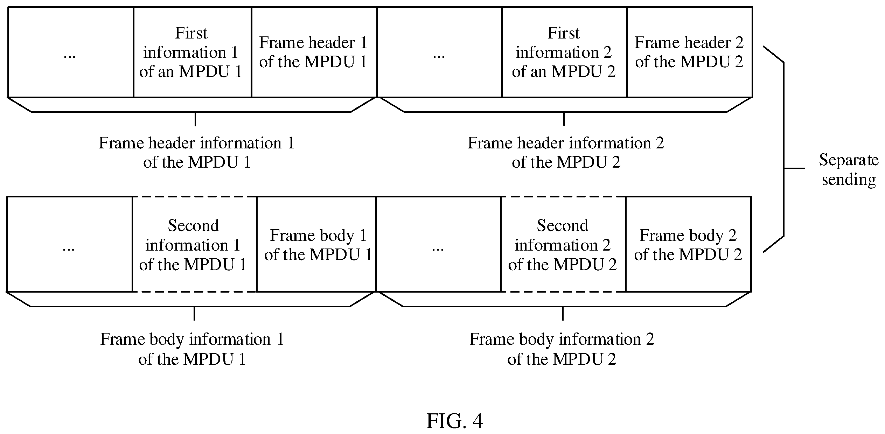

For ease of understanding, frame header information and frame body information of a plurality of MPDUs shown in FIG. 4 are used as an example. In FIG. 4, the frame header information and the frame body information of the plurality of MPDUs include frame header information 1 of an MPDU 1, frame body information 1 of the MPDU 1, frame header information 2 of an MPDU 2, and frame body information 2 of the MPDU 2. The frame header information 1 of the MPDU 1 includes first information 1 of the MPDU 1 and a frame header 1 of the MPDU 1, and the frame header information 2 of the MPDU 2 includes first information 2 of the MPDU 2 and a frame header 2 of the MPDU 2. The frame body information 1 of the MPDU 1 includes a frame body 1 of the MPDU 1, and the frame body information 2 of the MPDU 2 includes a frame body 2 of the MPDU 2. Optionally, the frame body information 1 of the MPDU 1 further includes second information 1 of the MPDU 1, and the frame body information 2 of the MPDU 2 further includes second information 2 of the MPDU 2.

Because frame header information of an MPDU includes first information used to indicate a frame body corresponding to a frame header of the MPDU, the frame header and the frame body of the MPDU can be matched by using the first information. Therefore, the frame header information and frame body information of the MPDU are sent in a separation manner to a receive end, so that the receive end can normally search for and parse the frame body of the MPDU, and data communication efficiency can also be improved. For the foregoing three separation manners, refer to the following detailed descriptions.

**In step 303, the receive end receives the frame header information and the frame body information that are of the MPDU and that are sent by the transmit end in a separation manner.**

This step includes a case in which the receive end receives frame header information and frame body information of one MPDU, and also includes a case in which the receive end receives frame header information and frame body information of a plurality of MPDUs. Regardless of a case of one MPDU or a case of the plurality of MPDUs, corresponding to the separation manners used by the transmit end in step 302, reception in this step is performed in the following three manners:

In the first reception manner, corresponding to the foregoing first separation manner, the receive end receives different PPDUs sent by the transmit end, and obtains frame header information and frame body information of one or more MPDUs by using the different PPDUs.

In the second reception manner, corresponding to the foregoing second separation manner, the receive end receives a PPDU sent by the transmit end, obtains frame header information of an MPDU by using a preamble field of the same PPDU, and obtains frame body information of the MPDU by using a data field of the same PPDU.

In the third reception manner, corresponding to the foregoing third separation manner, the receive end receives a PPDU sent by the transmit end, and obtains frame header information and frame body information of an MPDU by using different resource units in a data field of the same PPDU.

**In step 304, the receive end determines, based on the first information in the frame header information of the MPDU, the frame body corresponding to the frame header of the MPDU.**

After receiving the frame header information of the MPDU, the receive end may first store the frame header information of the MPDU, and then perform a frame body determining process after receiving the frame body information of the MPDU. Because the frame header information of the MPDU includes the first information used to indicate the frame body corresponding to the frame header of the MPDU, regardless of a separation manner used by the transmit end to send the frame header information and the frame body information of the MPDU, after receiving the frame header information and the frame body information that are of the MPDU and that are sent by the transmit end in the separation manner, the receive end may determine, by using the first information, the frame body corresponding to the frame header of the MPDU, and then may parse the frame body.

In this embodiment of this application, a manner used by the receive end to determine the frame body corresponding to the frame header of the MPDU includes but is not limited to the following several optional implementations:

In the first determining manner, the receive end determines, based on only the first information in the frame header information of the MPDU, the frame body corresponding to the frame header of the MPDU.

In the first determining manner, the first information includes information used to indicate a start location and an end location of the frame body of the MPDU, includes information used to indicate a start location and a length of the frame body of the MPDU, or includes information used to indicate a length and an end location of the frame body of the MPDU.

In the second determining manner, the receive end determines, based on the first information in the frame header information of the MPDU and the second information in the frame body information of the MPDU, the frame body corresponding to the frame header of the MPDU.

In the second determining manner, the first information in the frame header information of the MPDU includes a number ID of the MPDU, and the second information in the frame body information of the MPDU includes the number ID of the MPDU. Alternatively, both the first information in the frame header information of the MPDU and the second information in the frame body information of the MPDU include a sequence number, a traffic ID, and an association ID. Alternatively, the first information in the frame header information of the MPDU includes an ID of the MPDU, and the second information in the frame body information of the MPDU includes a result of an exclusive OR operation or a scrambling operation on a preset field by using the ID of the MPDU.

In the third determining manner, the frame body corresponding to the frame header of the MPDU is determined based on the first information in combination with the second information. The third determining manner includes a combination of the foregoing first determining manner and the foregoing second determining manner.

It should be noted that, in the foregoing second determining manner and third determining manner, the first information and the second information present in pair, that is, first information in frame header information is in pair with second information in corresponding frame body information, so that the receive end determines, based on the first information and the second information, a frame body corresponding to a frame header. Therefore, the first information and the second information may alternatively include other identification information instead of the ID of the MPDU, or the sequence number, the traffic ID, and the association ID, provided that identification information included in the first information is the same as or corresponds to identification information included in the second information, and different MPDUs can be distinguished. For example, first information corresponding to a frame header of an MPDU includes a sequence 1, and second information corresponding to a frame body of the MPDU also includes the sequence 1. In this case, after the receive end obtains the sequence 1 in frame header information, if the second information that has the same sequence 1 is found in frame body information, the frame body corresponding to the second information may be determined as a frame body to be found by the receive end.

In conclusion, for different cases of the first determining manner, different cases of the second determining manner, and different combinations of the first determining manner and the second determining manner, this embodiment of this application includes but is not limited to the following several cases:

In the first case, the first information includes information used to indicate a start location and an end location of the frame body of the MPDU.

In the second case, the first information includes information used to indicate a start location and a length of the frame body of the MPDU.

In the third case, the first information includes information used to indicate a length and an end location of the frame body of the MPDU.

In the fourth case, both the first information and the second information include an ID of the MPDU.

In the fifth case, both the first information and the second information include a sequence number, a traffic ID, and an association ID.

In the sixth case, the first information includes an ID of the MPDU; and the second information includes a result of an exclusive OR operation or a scrambling operation on a preset field by using the ID of the corresponding MPDU.

In the seventh case, the first information includes information used to indicate a start location and an end location of the frame body of the MPDU, and an ID of the MPDU, and the second information includes the ID of the MPDU.

In the eighth case, the first information includes information used to indicate a start location and a length of the frame body of the MPDU, and an ID of the MPDU; and the second information in the frame body information corresponding to the frame header includes the ID of the MPDU corresponding to the frame header and the frame body.

In the ninth case, the first information includes information used to indicate a length and an end location of the frame body of the MPDU, and an ID of the MPDU, and the second information includes the ID of the MPDU.

In the tenth case, the first information includes information used to indicate a start location and an end location of the frame body of the MPDU, a sequence number, a traffic ID, and an association ID; and the second information includes the sequence number, the traffic ID, and the association ID.

In the eleventh case, the first information includes information used to indicate a start location and a length of the frame body of the MPDU, a sequence number, a traffic ID, and an association ID; and the second information includes the sequence number, the traffic ID, and the association ID.

In the twelfth case, the first information includes information used to indicate a length and an end location of the frame body of the MPDU, a sequence number, a traffic ID, and an association ID; and the second information includes the sequence number, the traffic ID, and the association ID.

In the thirteenth case, the first information includes information used to indicate a start location and an end location of the frame body of the MPDU, and an ID of the MPDU, and the second information includes a result of an exclusive OR operation or a scrambling operation on a preset field by using the ID of the MPDU.

In the fourteenth case, the first information includes information used to indicate a start location and a length of the frame body of the MPDU, and an ID of the MPDU, and the second information includes a result of an exclusive OR operation or a scrambling operation on a preset field by using the ID of the MPDU.

In the fifteenth case, the first information includes information used to indicate a length and an end location of the frame body of the MPDU, and an ID of the MPDU, and the second information includes a result of an exclusive OR operation or a scrambling operation on a preset field by using the ID of the MPDU.

The first case to the third case are based on the first determining manner, the fourth case to the sixth case are based on the second determining manner, and the seventh case to the fifteenth case are based on the third determining manner that is a combination of the first determining manner and the second determining manner.

Further, in either of the foregoing cases, there may be a plurality of options for a location of the first information in the frame header information. For example, the first information may be carried in the frame header of the MPDU, or may be carried in another field other than the frame header in the frame header information of the MPDU. There may also be a plurality of options for a location of the second information in the frame body information. For example, the second information may be carried in the frame body of the MPDU, or may be carried in another field other than the frame body in the frame body information of the MPDU.

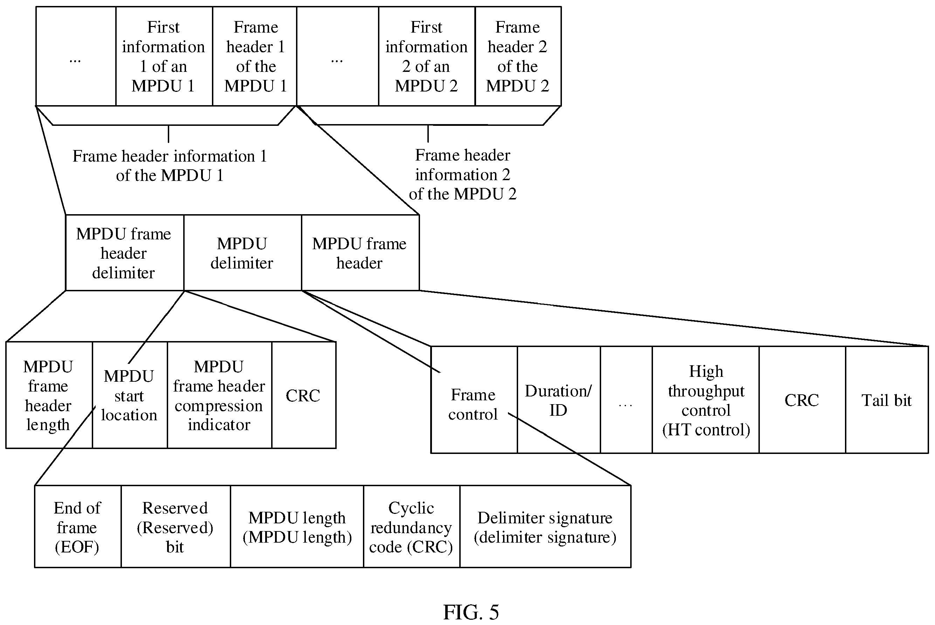

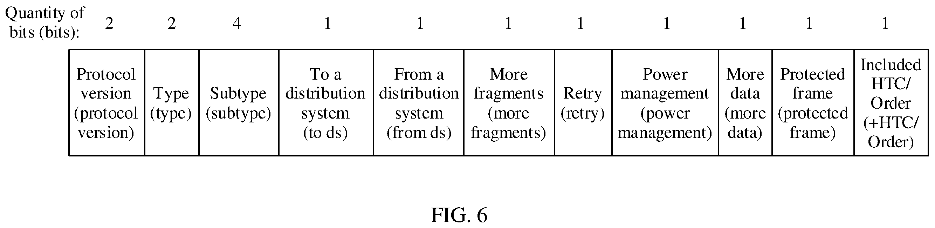

In addition, in a case of a plurality of MPDUs, optionally, each MPDU further includes an MPDU delimiter, to separate different MPDUs. The MPDU delimiter may be carried in frame header information of the MPDU, or may be carried in frame body information of the MPDU. Optionally, the frame header information of the MPDU further includes a frame header delimiter of the MPDU, to separate frame headers of different MPDUs. As shown in FIG. 5, a frame header delimiter of an MPDU includes an MPDU frame header length, an MPDU start location, an MPDU frame header compression indicator, and a CRC. The MPDU delimiter includes an end of frame (end of frame, EOF), a reserved (reserved) bit, an MPDU length (MPDU length), a cyclic redundancy code (CRC), and a delimiter signature (delimiter signature). The MPDU frame header includes frame control (frame control), duration/ID (duration/ID), high throughput control (HT control, HTC), and a CRC. Optionally, when the MPDU frame header is encoded through separate binary convolutional coding (binary convolutional coding, BCC), the MPDU frame header further has a tail bit. In addition, the MPDU frame header further includes fields (not shown in FIG. 5) such as an address 1 (A1), an address 2 (A2), an address 3 (A3), sequence control (sequence control), an address 4 (A4), and quality of service control (QoS control). The frame control (frame control) field included in the MPDU frame header carries some control information of the MPDU frame, and a format is shown in FIG. 6.

All or a part of a delimiter in the standard 801.11 may be used as the MPDU delimiter provided in this embodiment of this application. In a case in which a part of the delimiter in the standard 801.11 is used, for example, the CRC may not be transmitted, the MPDU delimiter and the MPDU frame header delimiter use a same CRC subfield, or the delimiter signature field may not be transmitted. A location of a delimiter is identified by using the MPDU frame header delimiter or the CRC of the MPDU delimiter.

For ease of understanding, based on a format of the MPDU, the following separately describes the different cases of the foregoing optional determining manners by using examples.

**The first case to the third case are described by using an example:**

The second case is described by using the frame header information 1 of the MPDU 1 and the frame header information 2 of the MPDU 2 shown in FIG. 5 as an example. The frame header information 1 of the MPDU 1 includes the frame header 1 of the MPDU 1 and the first information 1 of the MPDU 1. Further, the frame header information 1 of the MPDU 1 may be represented as an MPDU frame header delimiter, an MPDU delimiter, and an MPDU frame header. In addition, the first information 1 of the MPDU 1 may be located in the MPDU frame header delimiter and the MPDU delimiter. For example, in the second case, that the first information includes the information about the start location and the length of the frame body of the MPDU is used as an example. In FIG. 5, the MPDU start location is used to indicate the start location of the frame body of the MPDU, and the MPDU length is used to indicate the length of the frame body of the MPDU. The MPDU start location is carried in the MPDU frame header delimiter, and the length of the MPDU frame body is carried in the MPDU delimiter.

In addition, FIG. 5 uses only the second case as an example for description. The first case in which the first information includes the start location and the end location of the frame body of the MPDU and the third case in which the first information includes the end location and the length of the frame body of the MPDU are similar to the second case shown in FIG. 5. For example, the frame header information in the first case may be obtained by replacing the MPDU length in the second case shown in FIG. 5 with the MPDU end location. For another example, the frame header information in the third case may be obtained by replacing the MPDU start location in the second case shown in FIG. 5 with the MPDU end location.

It should be noted that, in addition to the foregoing several cases, a case in which only the MPDU start location is transmitted and the MPDU length is not transmitted may be further included. In this case, the MPDU start location and the MPDU end location may be obtained by using two MPDU start locations. In addition, it should be understood that merely a case of two MPDUs is used as an example in FIG. 5, and the frame header information 1 of the MPDU 1 is used for specific description. The frame header information 2 of the MPDU 2 is similar to the frame header information 1 of the MPDU 1. In addition, FIG. 5 is also applicable to a case in which there are more than two MPDUs. In addition, the frame header information 1 of the MPDU 1 and the frame header information 2 of the MPDU 2 shown in FIG. 5 may be sent in an aggregation manner, or may be separately sent in a non-aggregation manner.

Optionally, based on specific content of the frame header information of the MPDU, in addition to the information used to indicate the start location and the end location of the frame body of the MPDU, the information used to indicate the start location and the length of the frame body of the MPDU, or the information used to indicate the length and the end location of the frame body of the MPDU, the first information may further include other signaling information. For example, an end of frame, a CRC, a delimiter signature in the frame header information of the MPDU may further be included in the first information. This is not limited in this embodiment of this application.

**The fourth case is described by using an example:**

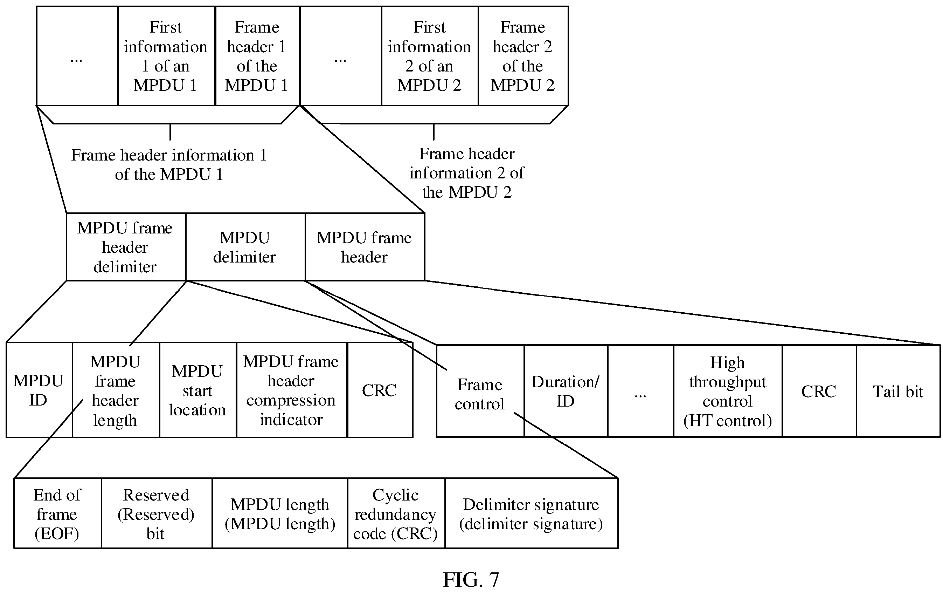

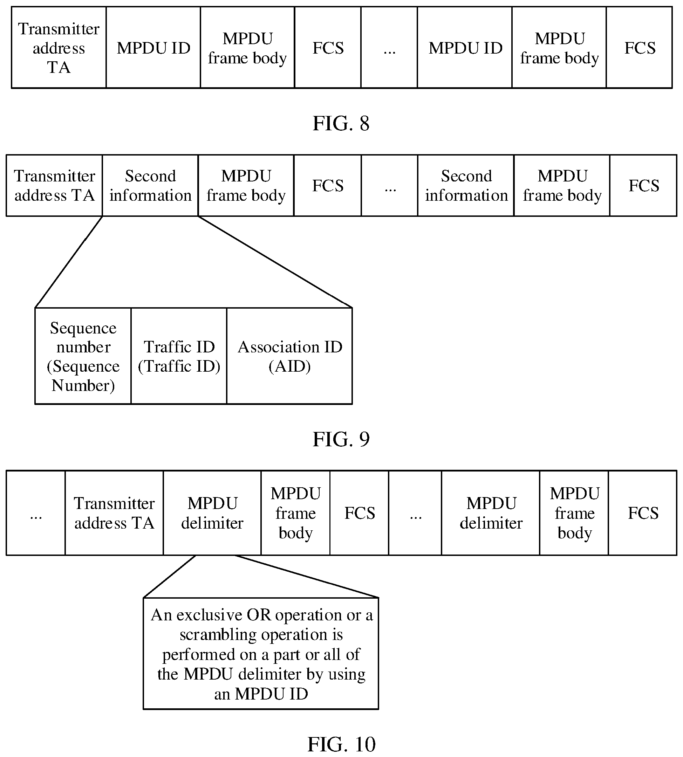

In the fourth case, both the first information and the second information include the ID of the MPDU. In this case, for the frame header information of the MPDU, refer to FIG. 7, and for the frame body information of the MPDU, refer to FIG. 8.

It should be understood that, in the fourth case, because the MPDU ID can be used to identify the MPDU, information such as the start location of the MPDU frame body in the first information may be omitted, so that overheads of the frame header information of the MPDU are further reduced.

**The fifth case is described by using an example:**

The fifth case is similar to the fourth case. The frame body information includes the second information, the first information and the second information present in pair and both are associated with a same MPDU, and the second information may be located in a field before a frame body of one MPDU. Both the first information and the corresponding second information include a sequence number, a traffic ID, and an association ID.

The sequence number may be a number, and is used to indicate a sequence frame number of the MPDU. The traffic ID is used to indicate a service type that is of a service, such as a video service or a voice service, and that is carried in the MPDU frame. The association ID is used to indicate an identifier of a station that receives the MPDU frame. After obtaining a sequence number, a traffic ID, and an association ID in first information, if the receive end determines, in frame body information, second information that has a sequence number, a traffic ID, and an association ID that are the same as those in the first information corresponding to a frame header of one MPDU, a frame body corresponding to the second information may be determined as a frame body of the MPDU. For example, a frame body after a field in which the second information is located is determined as the frame body corresponding to the MPDU frame header.

For ease of understanding, in this case, for the frame body information of the MPDU, refer to FIG. 9.

**The sixth case is described by using an example:**

In the sixth case, the frame body information includes the second information, and the first information and the second information present in pair and both are associated with a same MPDU. The first information includes an ID of the MPDU corresponding to a frame header; and the second information includes a result of an exclusive OR operation or a scrambling operation on a preset field by using the ID of the corresponding MPDU.

The preset field may be any field that is in the frame body information of the MPDU and that is pre-agreed on between the transmit end and the receive end. The field may be an existing field, or may be a field newly added for scrambling. This is not limited in this application. For example, the preset field may be some or all fields of an MPDU delimiter, for example, a signature field and a generated CRC field. For example, as shown in FIG. 10, the exclusive OR operation or the scrambling operation is performed, so that the ID of the MPDU does not need to occupy an extra bit, thereby reducing overheads.

In an example, the result of the exclusive OR operation or the scrambling operation may be stored in the preset field. In other words, the result obtained after the transmit end performs the exclusive OR operation or the scrambling operation on the preset field is still stored in the preset field. In another example, the result may alternatively be stored in a reserved field or a newly added field that is different from the preset field. In other words, after performing the exclusive OR operation or the scrambling operation on the preset field, the transmit end stores the result in another field. After obtaining the ID of the MPDU that is in the first information, the receive end performs an exclusive OR operation or a descrambling operation on the result in each piece of second information by using the MPDU ID, to determine second information that has a result of the exclusive OR operation or the descrambling operation that is the same as the preset field. In this case, a frame body corresponding to the second information is determined as the frame body corresponding to the frame header of the first information.

It should be noted that this embodiment of this application is not limited to a case in which the scrambling is performed by using the MPDU ID. For example, the first information may alternatively include a length of the MPDU frame body, and the second information includes a result of an exclusive OR operation or a scrambling operation by using the length of the MPDU frame body. The first information may alternatively include an association ID (Association ID, AID) of a station, and the second information includes a result of an exclusive OR operation or a scrambling operation by using the AID.

**The seventh case and the ninth case are described by using an example:**

Because the eighth case is a combination of the second case and the fourth case, for the start location and the length of the frame body of the MPDU, refer to the second case, and for the ID of the MPDU included in the first information and the second information, refer to the fourth case.

For example, in the eighth case, the MPDU ID included in the first information may be carried in the MPDU frame header delimiter. For a format of the frame header information of the MPDU, refer to FIG. 7. For a format of the frame body information of the MPDU, refer to FIG. 8.

It should be understood that, because the seventh case is a combination of the first case and the fourth case, for the start location and the end location of the frame body of the MPDU, refer to the first case, and for the ID of the MPDU included in the first information and the second information, refer to the fourth case. Because the ninth case is a combination of the third case and the fourth case, for the start location and the end location of the frame body of the MPDU, refer to the third case, and for the ID of the MPDU included in the first information and the second information, refer to the fourth case.

**The tenth case to the twelfth case are described by using an example:**

Because the tenth case is a combination of the first case and the fifth case, reference may be made to the first case and the fifth case. Because the eleventh case is a combination of the second case and the fifth case, reference may be made to the second case and the fifth case. Because the twelfth case is a combination of the third case and the fifth case, reference may be made to the third case and the fifth case.

For example, for a format of the frame body information in the tenth case to the twelfth case, refer to FIG. 9.

**The thirteenth case to the fifteenth case are described by using an example:**

Because the thirteenth case is a combination of the first case and the sixth case, reference may be made to the first case and the sixth case. Because the fourteenth case is a combination of the second case and the sixth case, reference may be made to the second case and the sixth case. Because the fifteenth case is a combination of the third case and the sixth case, reference may be made to the third case and the sixth case.

In the following, the foregoing three separation manners are further explained and described.

In the first separation manner, the frame header information and the corresponding frame body information of the MPDU are separately carried in different physical layer protocol data units (physical layer protocol data unit, PPDU).

For a case of one MPDU in the first separation manner, frame header information and frame body information of the MPDU may be separately carried in different PPDUs, and the different PPDUs may be sent in a time division manner or a frequency division manner.

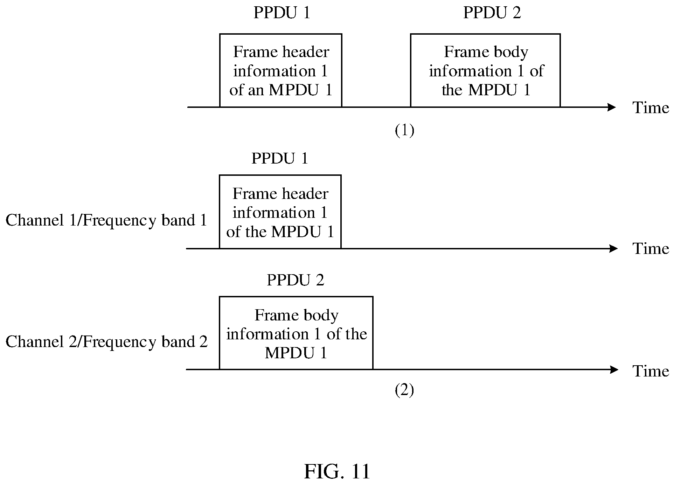

For example, as shown in FIG. 11, the frame header information 1 of the MPDU 1 and the frame body information 1 of the MPDU 1 are carried respectively in a PPDU 1 and a PPDU 2. The PPDU 1 and the PPDU 2 may be sent in the time division manner, as shown in (1) in FIG. 11. Optionally, the PPDU 1 and the PPDU 2 may alternatively be sent in the frequency division manner. As shown in (2) in FIG. 11, the PPDU 1 is sent on a channel 1 or in a frequency band 1, and the PPDU 2 is sent on a channel 2 or in a frequency band 2.

### A case of a plurality of MPDUs in the first separation manner includes but is not limited to the following several cases:

In the first case of the plurality of MPDUs, frame header information and frame body information of each MPDU may be separately carried in different PPDUs, and the different PPDUs may be sent in the time division manner, the frequency division manner, or a manner combining time division and frequency division.

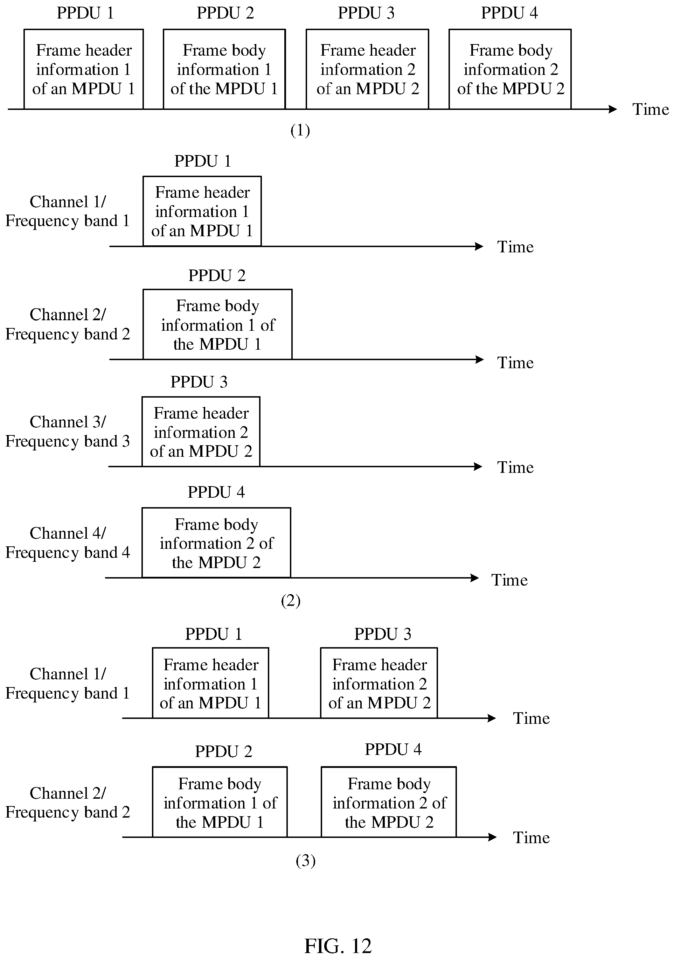

The MPDU 1 and the MPDU 2 are used as an example. The frame header information 1 of the MPDU 1 and the frame body information 1 of the MPDU 1 are carried respectively in a PPDU 1 and a PPDU 2, and the frame header information 2 of the MPDU 2 and the frame body information 2 of the MPDU 2 are carried respectively in a PPDU 3 and a PPDU 4. The PPDU 1 to the PPDU 4 may be sent in the time division manner, as shown in (1) in FIG. 12. Optionally, the PPDU 1 to the PPDU 4 may alternatively be sent in the frequency division manner. As shown in (2) in FIG. 12, the PPDU 1 is sent on a channel 1 or in a frequency band 1, the PPDU 2 is sent on a channel 2 or in a frequency band 2, the PPDU 3 is sent on a channel 3 or in a frequency band 3, and the PPDU 4 is sent on a channel 4 or in a frequency band 4. Optionally, the PPDU 1 to the PPDU 4 may be sent in the manner combining time division and frequency division. As shown in (3) in FIG. 12, the PPDU 1 and the PPDU 3 are sent on the channel 1 or in the frequency band 1 at different time points, and the PPDU 2 and the PPDU 4 are sent on the channel 2 or in the frequency band 2 at different time points.

In the second case of the plurality of MPDUs, frame header information of the plurality of MPDUs may be aggregated, and frame body information of the plurality of MPDUs may also be aggregated. In this case, aggregated frame header information and corresponding aggregated frame body information may be separately carried in different PPDUs. The different PPDUs may be sent in the time division manner, or may be sent in the frequency division manner.

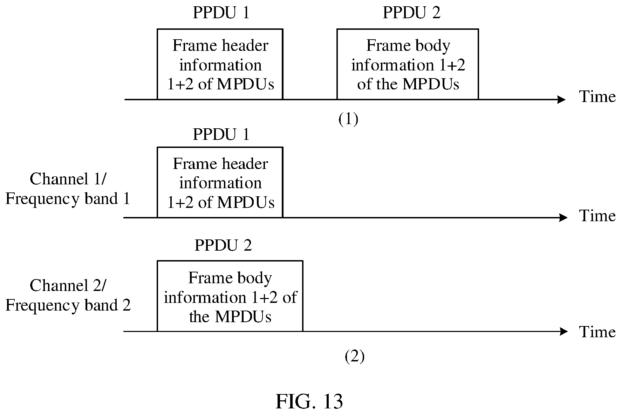

The MPDU 1 and the MPDU 2 are still used as an example. The frame header information 1 of the MPDU 1 and the frame header information 2 of the MPDU 2 are aggregated, and aggregated frame header information is frame header information 1+2 of the MPDUs. The frame body information 1 of the MPDU 1 and the frame body information 2 of the MPDU 2 are aggregated, and aggregated frame body information is frame body information 1+2 of the MPDUs. The frame header information 1+2 of the MPDUs is carried in a PPDU 1, and the frame body information 1+2 of the MPDUs is carried in a PPDU 2. The PPDU 1 and the PPDU 2 may be sent in the time division manner, as shown in (1) in FIG. 13. Optionally, the PPDU 1 and the PPDU 2 may alternatively be sent in the frequency division manner. As shown in (2) in FIG. 13, the PPDU 1 is sent on a channel 1 or in a frequency band 1, and the PPDU 2 is sent on a channel 2 or in a frequency band 2.

It should be understood that, in the case of the plurality of MPDUs, the frame header information of the plurality of MPDUs may be all aggregated, to obtain one piece of aggregated frame body information, and the frame body information of the plurality of MPDUs may also be all aggregated, to obtain one piece of aggregated frame body information. Details are shown in the foregoing manner shown in FIG. 13.

In the third case of the plurality of MPDUs, frame header information of the plurality of MPDUs may be grouped, and frame header information of a group of MPDUs is aggregated. Frame body information of the plurality of MPDUs may also be correspondingly grouped, and frame body information of a group of MPDUs is aggregated. In this way, a plurality of pieces of aggregated frame header information and a plurality of pieces of aggregated frame body information are obtained. The plurality of pieces of aggregated frame header information and the plurality of pieces of aggregated frame body information may be separately carried in different PPDUs, and the different PPDUs may be sent in the time division manner, the frequency division manner, or the manner combining time division and frequency division.

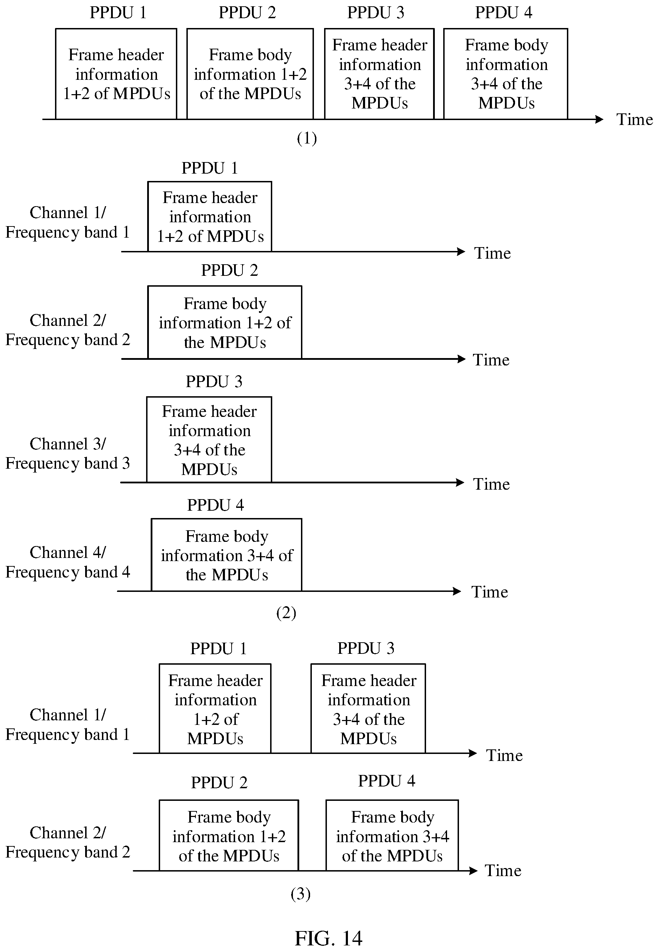

The MPDU 1, the MPDU 2, an MPDU 3 and an MPDU 4 are used as an example. The MPDU 1 and the MPDU 2 are in one group. The frame header information 1 of the MPDU 1 and the frame header information 2 of the MPDU 2 are aggregated, and aggregated frame header information is frame header information 1+2 of the MPDUs. The frame body information 1 of the MPDU 1 and the frame body information 2 of the MPDU 2 are aggregated, and aggregated frame body information is frame body information 1+2 of the MPDUs. The MPDU 3 and the MPDU 4 are in one group. Frame header information 3 of the MPDU 3 and frame header information 4 of the MPDU 4 are aggregated, and aggregated frame header information is frame header information 3+4 of the MPDUs. Frame body information 3 of the MPDU 3 and frame body information 4 of the MPDU 4 are aggregated, and aggregated frame body information is frame body information 3+4 of the MPDUs. The frame header information 1+2 of the MPDUs is carried in a PPDU 1, the frame body information 1+2 of the MPDUs is carried in a PPDU 2, the frame header information 3+4 of the MPDUs is carried in a PPDU 3, and the frame body information 3+4 of the MPDUs is carried in a PPDU 4. The PPDU 1 to the PPDU 4 may be sent in the time division manner, as shown in (1) in FIG. 14. Optionally, the PPDU 1 to the PPDU 4 may be sent in the frequency division manner. As shown in (2) in FIG. 14, the PPDU 1 is sent on a channel 1 or in a frequency band 1, the PPDU 2 is sent on a channel 2 or in a frequency band 2, the PPDU 3 is sent on a channel 3 or in a frequency band 3, and the PPDU 4 is sent on a channel 4 or in a frequency band 4. Optionally, the PPDU 1 to the PPDU 4 may alternatively be sent in the manner combining time division and frequency division. As shown in (3) in FIG. 14, the PPDU 1 and the PPDU 3 are sent on the channel 1 or in the frequency band 1 at different time points, and the PPDU 2 and the PPDU 4 are sent on the channel 2 or in the frequency band 2 at different time points.

In the fourth case of the plurality of MPDUs, frame header information of the plurality of MPDUs may be aggregated, and frame body information of the plurality of MPDUs may not be aggregated. In this case, aggregated frame header information and corresponding non-aggregated frame body information may be separately carried in different PPDUs. The different PPDUs may be sent in the time division manner, the frequency division manner, or the manner combining time division and frequency division.

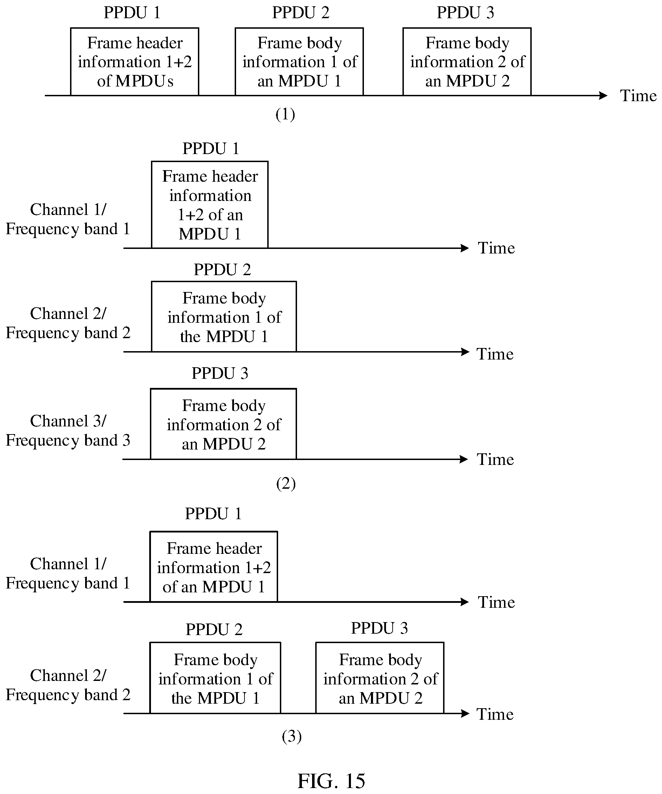

The MPDU 1 and the MPDU 2 are still used as an example. The frame header information 1 of the MPDU 1 and the frame header information 2 of the MPDU 2 are aggregated, and aggregated frame header information is frame header information 1+2 of the MPDUs. The frame header information 1+2 of the MPDUs is carried in a PPDU 1, the frame body information 1 of the MPDU 1 is carried in a PPDU 2, and the frame body information 2 of the MPDU 2 is carried in a PPDU 3. The PPDU 1 to the PPDU 3 may be sent in the time division manner, as shown in (1) in FIG. 15. Optionally, the PPDU 1 to the PPDU 3 may be sent in the frequency division manner. As shown in (2) in FIG. 15, the PPDU 1 is sent on a channel 1 or in a frequency band 1, the PPDU 2 is sent on a channel 2 or in a frequency band 2, and the PPDU 3 is sent on a channel 3 or in a frequency band 3. Optionally, the PPDU 1 to the PPDU 3 may alternatively be sent in the manner combining time division and frequency division. As shown in (3) in FIG. 15, the PPDU 1 is sent on the channel 1 or in the frequency band 1, and the PPDU 2 and the PPDU 3 are sent on the channel 2 or in the frequency band 2 at different time points.

Based on the foregoing cases, for a case in which a PPDU is sent in the frequency division manner, PPDUs sent on different channels or in different frequency bands do not occupy an airtime of each other, so that a transmission delay is not caused and transmission efficiency can be further improved.

For example, when the PPDU 1 and the PPDU 2 are sent in the frequency division manner, the PPDU 1 carrying frame header information of an MPDU may be sent in a lower frequency band such as 2.4 gigahertz (GHz) or 5 GHz, and the PPDU 2 carrying frame body information of an MPDU may be sent in a higher frequency band such as 6 GHz. A frame header of the MPDU is transmitted at a low frequency by using a reliable modulation and coding scheme (modulation and coding scheme, MCS), and does not occupy an airtime at 6 GHz, so that a delay is not caused for transmission of a frame body at 6 GHz. In addition, MPDU frame header information may be aggregated with a plurality of different resource units that are in a same PPDU, or MPDU frame headers that correspond to MPDU frame bodies in different PPDUs may be aggregated, to further improve transmission efficiency.

In the second separation manner, the frame header information and the corresponding frame body information of the MPDU are carried separately in a preamble field and a data field of a same PPDU.

For a case of one MPDU in the second separation manner, the frame header information and the frame body information of the MPDU are carried separately in the preamble field and the data field of the same PPDU.

For a case of a plurality of MPDUs in the second separation manner, frame header information of each MPDU may be separately carried in different subfields of a preamble field of a same PPDU, and frame body information of each MPDU may be separately carried in different resource units of the data field of the PPDU in which the frame header information is located.

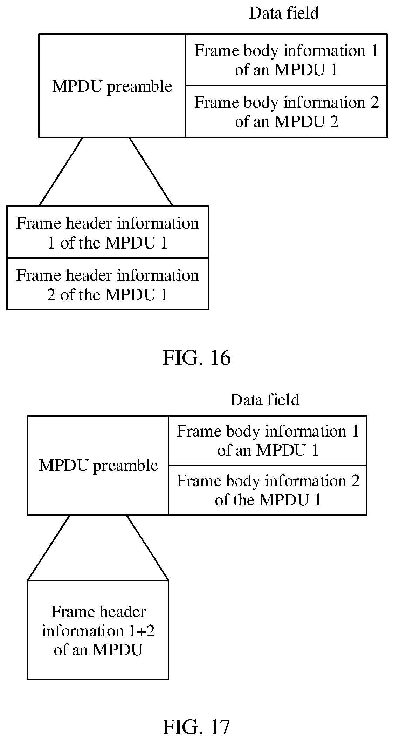

The MPDU 1 and the MPDU 2 are used as an example. As shown in FIG. 16, the frame header information 1 of the MPDU 1 and the frame header information 2 of the MPDU 2 are separately carried in different subfields of a preamble field of a same PPDU, and the frame body information 1 of the MPDU 1 and the frame body information 2 of the MPDU 2 are separately carried in different resource units of the data field of the PPDU.

Optionally, in the case in which there are the plurality of MPDUs, the frame header information of the MPDUs may be aggregated, aggregated frame header information is carried in a preamble field of a PPDU, and the corresponding frame body information is separately carried in different resource units of the data field of the same PPDU.

The MPDU 1 and the MPDU 2 are used as an example. As shown in FIG. 17, the frame header information 1 of the MPDU 1 and the frame header information 2 of the MPDU 2 are aggregated, and aggregated frame header information is frame header information 1+2 of the MPDUs. The frame header information 1+2 of the MPDUs is carried in a preamble field of a PPDU, and the frame body information 1 of the MPDU 1 and the frame body information 2 of the MPDU 2 are separately carried in different resource units of the data field of the PPDU.

It should be understood that, in addition to aggregation of frame header information, frame body information may also be aggregated. Aggregated frame header information is carried in a preamble field of a PPDU, and aggregated frame body information is carried in different resource units of the data field of the PPDU in which the frame header information is located.

In the third separation manner, the frame header information and the corresponding frame body information of the MPDU are separately carried in different resource units in a data field of a same PPDU.

In the third separation manner, different resource units of the data field may be different space resource units, time resource units, or frequency resource units.

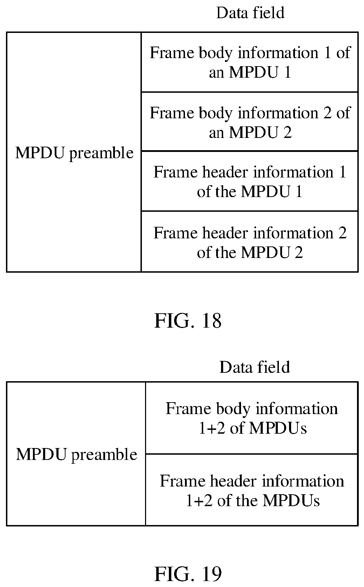

The MPDU 1 and the MPDU 2 are used as an example. As shown in FIG. 18, the frame header information 1 of the MPDU 1, the frame header information 2 of the MPDU 2, the frame body information 1 of the MPDU 1, and the frame body information 2 of the MPDU 2 are separately carried in different resource units in a data field of a same PPDU.

Optionally, in a case in which there are a plurality of MPDUs, frame header information of the plurality of MPDUs may be aggregated, to obtain aggregated frame header information, and frame body information of the plurality of MPDUs may be aggregated, to obtain aggregated frame body information. The aggregated frame header information and the aggregated frame body information may be separately carried in different resource units in a data field of a same PPDU.

The MPDU 1 and the MPDU 2 are still used as an example. As shown in FIG. 19, the frame header information 1 of the MPDU 1 and the frame header information 2 of the MPDU 2 are aggregated, and aggregated frame header information is frame header information 1+2 of the MPDUs. The frame body information 1 of the MPDU 1 and the frame body information 2 of the MPDU 2 are aggregated, and aggregated frame body information is frame body information 1+2 of the MPDUs. The frame header information 1+2 of the MPDUs and the frame body information 1+2 of the MPDUs are separately carried in different resource units in a data field of a same PPDU.

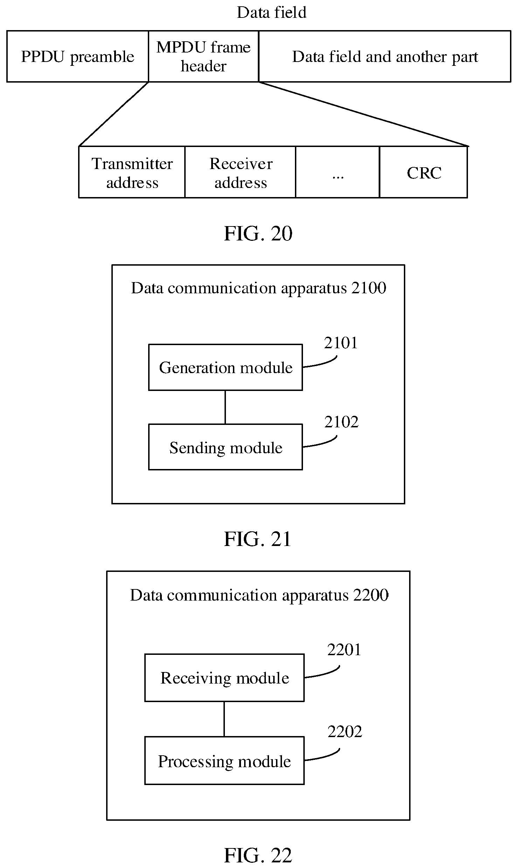

Further, besides the data communication method provided in the foregoing embodiments of this application, in an existing protocol, an MPDU frame header is usually used as an independent field, and a relatively reliable coding and modulation mode is used. Another part including an MPDU frame body is separately encoded. In addition, during data transmission, the MPDU frame header and the MPDU frame body are carried on a same resource for sending. As shown in FIG. 20, the MPDU frame header includes a transmitter address, a receiver address, a CRC, and the like. The transmitter address and the receiver address are used, so that the receive end can determine a transmitter and a receiver of received data. Even if some or all data is incorrectly received, when retransmitted data is received, it can be determined that the data sent for the first time and the data sent for the second time are sent by a same transmitter, and the previously received data and the currently received data may be combined.

It can be easily learned that, in FIG. 20, although the MPDU frame header is used as an independent field, both the MPDU frame header and the MPDU frame body are still carried in a data field of a PPDU. It can be learned that, in the case in which the MPDU frame header and the MPDU frame body are carried on a same resource for sending, that a length of the MPDU frame header is variable is not considered. In addition, the MPDU frame header and the MPDU frame body are still transmitted in a same resource unit. Consequently, efficiency is low. In addition, it can be learned from a data clustering structure of a HARQ shown in FIG. 20 that the data communication method used in FIG. 20 is applicable only to a single MPDU, and is not applicable to an A-MPDU.

In comparison, in the method provided in this embodiment of this application, frame header information and frame body information of an MPDU are separately sent, so that data communication efficiency can be improved. In addition, the frame header information includes first information used to determine a frame body corresponding to a frame header, so that even when the frame header information and the frame body information are separately transmitted, a receive end can still search, based on the first information included in the frame header information, for the frame body corresponding to the frame header, thereby ensuring that the receive end can normally parse the frame body. In other words, compared with the data communication method shown in FIG. 20, the data communication method provided in this embodiment of this application is more efficient and more widely applicable.

In conclusion, according to the data communication method provided in this application, the transmit end sends the generated frame header information and frame body information of the MPDU in the separation manner to the receive end. The frame header information includes the frame header, the frame body information includes the frame body, and the frame header information includes the first information used to indicate the frame body corresponding to the frame header. Therefore, although the frame header information is separated from the frame body information, the frame header and the frame body can correspond to each other, and the receive end can still find the frame body of the MPDU, so that the frame header and the frame body are carried on different resources for transmission, thereby improving transmission efficiency. In addition, the method provided in this application provides a plurality of manners of separately transmitting the frame header and the frame body. The method is not only applicable to a single MPDU, but also applicable to an A-MPDU, so that an application scope of data communication is expanded.

An embodiment of this application provides a data communication apparatus. The data communication apparatus may be applied to a data transmit end, for example, a STA or an AP. Referring to FIG. 21, the data communication apparatus 2100 includes:
a generation module 2101, configured to generate frame header information and frame body information of one or more MPDUs, where the frame header information of one MPDU includes a frame header of the MPDU, frame body information of the MPDU includes a frame body of the MPDU, the frame header of the MPDU corresponds to the frame body of the MPDU, and the frame header information of the MPDU includes first information used to indicate the frame body corresponding to the frame header of the MPDU; and
a sending module 2102, configured to send the frame header information and the frame body information of the MPDU in a separation manner to a receive end.

Correspondingly, an embodiment of this application provides a data communication apparatus. The data communication apparatus may be applied to a data receive end, for example, a STA or an AP. Referring to FIG. 22, the data communication apparatus 2200 includes:
a receiving module 2201, configured to receive frame header information and frame body information that are of one or more MPDUs and that are sent by a transmit end in a separation manner, where the frame header information of one MPDU includes a frame header of the MPDU, frame body information of the MPDU includes a frame body of the MPDU, the frame header of the MPDU corresponds to the frame body of the MPDU, and the frame header information of the MPDU includes first information used to indicate the frame body corresponding to the frame header of the MPDU; and
a processing module 2202, configured to determine, based on the first information in the frame header information of the MPDU, the frame body corresponding to the frame header of the MPDU.

It should be understood that, when the apparatuses provided in FIG. 21 and FIG. 22 implement functions of the apparatuses, division into the foregoing functional modules is merely used as an example for description. In actual application, the foregoing functions may be allocated to different functional modules for implementation based on a requirement. That is, an inner structure of a device is divided into different functional modules, to implement all or some of the functions described above. In addition, the apparatuses provided in the foregoing embodiments and the method embodiments pertain to a same concept. For a specific implementation process thereof, refer to the method embodiments. Details are not described herein again.

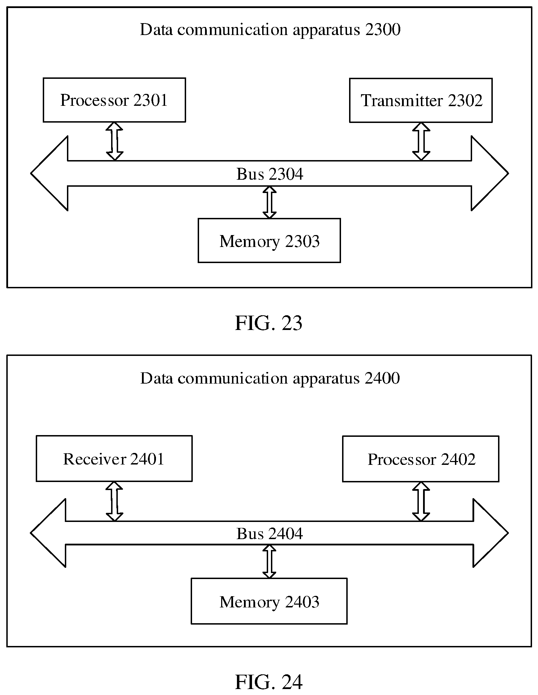

Based on a same concept, an embodiment of this application provides a data communication apparatus. The data communication apparatus may be applied to a data transmit end, for example, a STA or an AP. Referring to FIG. 23, the data communication apparatus 2300 includes:
a processor 2301, configured to generate frame header information and frame body information of one or more MPDUs, where the frame header information of one MPDU includes a frame header of the MPDU, frame body information of the MPDU includes a frame body of the MPDU, the frame header of the MPDU corresponds to the frame body of the MPDU, and the frame header information of the MPDU includes first information used to indicate the frame body corresponding to the frame header of the MPDU; and
a transmitter 2302, configured to send the frame header information and the frame body information of the MPDU in a separation manner to a receive end.

In an optional implementation, the transmitter 2302 may be a wireless or wired transmitter, for example, a radio frequency module or an antenna module. The transmitter 2302 may include one or more antennas, and may be an array antenna or the like.

In an optional implementation, the data communication apparatus 2300 further includes a memory 2303. The processor 2301, the transmitter 2302, and the memory 2303 communicate with each other through a bus 2304, or may communicate in another manner such as wireless transmission. The processor 2301 is configured to control the transmitter 2302 to perform a sending operation.

Correspondingly, this application provides a data communication apparatus. The data communication apparatus may be applied to a data receive end, for example, a STA or an AP. Referring to FIG. 24, the data communication apparatus 2400 includes:
a receiver 2401, configured to receive frame header information and frame body information that are of one or more MPDUs and that are sent by a transmit end in a separation manner, where the frame header information of one MPDU includes a frame header of the MPDU, frame body information of the MPDU includes a frame body of the MPDU, the frame header of the MPDU corresponds to the frame body of the MPDU, and the frame header information of the MPDU includes first information used to indicate the frame body corresponding to the frame header of the MPDU; and
a processor 2402, configured to determine, based on the first information in the frame header information of the MPDU, the frame body corresponding to the frame header of the MPDU.

In an optional implementation, the receiver 2401 may be a wireless or wired receiver, for example, a radio frequency module or an antenna module. The receiver 2401 may include one or more antennas, and may be an array antenna or the like.

In an optional implementation, the data communication apparatus 2400 further includes a memory 2403. The receiver 2401, the processor 2402, and the memory 2403 communicate with each other through a bus 2404, or may communicate in another manner such as wireless transmission. The processor 2402 is configured to control the receiver 2401 to perform a receiving operation.

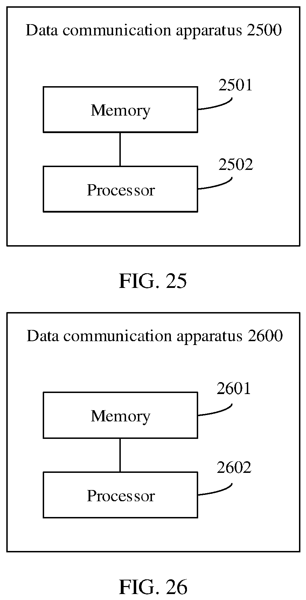

This application provides a communications apparatus of a transmit end. Referring to FIG. 25, the communications apparatus 2500 includes a memory 2501 and a processor 2502, and the memory 2501 is coupled to the processor 2502. The processor 2502 is configured to: generate frame header information and frame body information of one or more MPDUs, where the frame header information of the MPDU includes a frame header of the MPDU, the frame body information of the MPDU includes a frame body of the MPDU, the frame header of the MPDU corresponds to the frame body of the MPDU, and the frame header information of the MPDU includes first information used to indicate the frame body corresponding to the frame header of the MPDU; and send, through a transmitter, the frame header information and the frame body information of the MPDU in a separation manner to a receive end.

Correspondingly, this application provides a communications apparatus of a receive end. Referring to FIG. 26, the communications apparatus 2600 includes a memory 2601 and a processor 2602, where the memory 2601 is coupled to the processor 2602. The processor 2602 is configured to: receive, through a receiver, frame header information and frame body information that are of one or more MPDUs and that are sent by a transmit end in a separation manner, where the frame header information of the MPDU includes a frame header of the MPDU, the frame body information of the MPDU includes a frame body of the MPDU, the frame header of the MPDU corresponds to the frame body of the MPDU, and the frame header information of the MPDU includes first information used to indicate the frame body corresponding to the frame header of the MPDU, where the frame header includes signaling used to parse the frame body, and the frame body includes a payload; and determine, based on the first information in the frame header information of the MPDU, the frame body corresponding to the frame header of the MPDU.

This application provides a processor, and the processor includes:
at least one circuit, configured to generate frame header information and frame body information of one or more MPDUs, where the frame header information of the MPDU includes a frame header of the MPDU, the frame body information of the MPDU includes a frame body of the MPDU, the frame header of the MPDU corresponds to the frame body of the MPDU, and the frame header information of the MPDU includes first information used to indicate the frame body corresponding to the frame header of the MPDU; and
at least one circuit, configured to send, through a transmitter, the frame header information and the frame body information of the MPDU in a separation manner to a receive end.

Correspondingly, this application provides a processor, and the processor includes:
at least one circuit, configured to receive, through a receiver, frame header information and frame body information that are of one or more MPDUs and that are sent by a transmit end in a separation manner, where the frame header information of the MPDU includes the frame header of the MPDU, the frame body information of the MPDU includes the frame body of the MPDU, the frame header of the MPDU corresponds to the frame body of the MPDU, and the frame header information of the MPDU includes first information used to indicate the frame body corresponding to the frame header of the MPDU, where the frame header includes signaling used to parse the frame body, and the frame body includes a payload; and
at least one circuit, configured to determine, based on the first information in the frame header information of the MPDU, the frame body corresponding to the frame header of the MPDU.

It should be understood that the processor may be a central processing unit (Central Processing Unit, CPU); or may be another general-purpose processor, a digital signal processor (digital signal processor, DSP), an application-specific integrated circuit (application specific integrated circuit, ASIC), a field programmable gate array (field-programmable gate array, FPGA) or another programmable logic device, a discrete gate or transistor logic device, or a discrete hardware component. The general-purpose processor may be a microprocessor, or any conventional processor or the like. It should be noted that the processor may be a processor that supports an advanced reduced instruction set computing machine (advanced RISC machine, ARM) architecture.

This application provides a computer-readable storage medium. The computer-readable storage medium stores a computer program. The computer program includes at least one segment of code, and the at least one segment of code may be executed by a computer, to control the computer to perform steps and/or procedures corresponding to the receive end or the transmit end in the foregoing method embodiments.

This application provides a computer program. When the computer program is executed by a computer, a processor or the computer can be enabled to perform steps and/or procedures corresponding to the transmit end or the receive end in the foregoing method embodiments.

Further, in an optional embodiment, the foregoing memory may include a read-only memory and a random access memory, and provide instructions and data to the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example but not a limitative description, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedure or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a compact disc), a semiconductor medium (for example, a solid state disk (solid-state drive, SSD)), or the like.

## Claims

1. A data transmission method, wherein the method comprises:
generating (301) frame header information and frame body information of one or more medium access control protocol data units, MPDUs, wherein the frame header information of one MPDU comprises a frame header of the MPDU, the frame body information of the MPDU comprises a frame body of the MPDU, the frame header of the MPDU corresponds to the frame body of the MPDU, and the frame header information of the MPDU comprises first information used to indicate the frame body corresponding to the frame header of the MPDU; and
sending (302) the frame header information and the frame body information of the MPDU in a separation manner to a receive end;
**characterised in that** the separation manner used for the frame header information and the frame body information of the MPDU comprises:
the frame header information and the frame body information of the MPDU are separately carried in different physical layer protocol data units, PPDUs.

2. A data communication method, wherein the method comprises:
receiving (303) frame header information and frame body information that are of one or more medium access control protocol data units, MPDUs and that are sent by a transmit end in a separation manner, wherein the frame header information of one MPDU comprises a frame header of the MPDU, the frame body information of the MPDU comprises a frame body of the MPDU, the frame header of the MPDU corresponds to the frame body of the MPDU, and the frame header information of the MPDU comprises first information used to indicate the frame body corresponding to the frame header of the MPDU; and
determining (304), based on the first information in the frame header information of the MPDU, the frame body corresponding to the frame header of the MPDU;
**characterised in that** the separation manner used for the frame header information and the frame body information of the MPDU comprises:
the frame header information and the frame body information of the MPDU are separately carried in different physical layer protocol data units, PPDUs.

3. The method according to claim 1 or claim 2, wherein the first information in the frame header information of the MPDU comprises:
information used to indicate a start location and an end location of the frame body of the MPDU;
information used to indicate a start location and a length of the frame body of the MPDU; or
information used to indicate a length and an end location of the frame body of the MPDU.

4. The method according to any one of claims 1 to 3, wherein the frame body information of the MPDU further comprises second information;
the first information in the frame header information of the MPDU comprises a number ID of the MPDU, and the second information in the frame body information of the MPDU comprises the number ID of the MPDU;
both the first information in the frame header information of the MPDU and the second information in the frame body information of the MPDU comprise a sequence number, a traffic ID, and an association ID; or
the first information in the frame header information of the MPDU comprises an ID of the MPDU, and the second information in the frame body information of the MPDU comprises a result of an exclusive OR operation or a scrambling operation on a preset field by using the ID of the MPDU.

5. A data communication apparatus (2100), wherein the apparatus comprises:
a generation module (2101), configured to generate frame header information and frame body information of one or more medium access control protocol data units, MPDUs, wherein the frame header information of one MPDU comprises a frame header of the MPDU, the frame body information of the MPDU comprises a frame body of the MPDU, the frame header of the MPDU corresponds to the frame body of the MPDU, and the frame header information of the MPDU comprises first information used to indicate the frame body corresponding to the frame header of the MPDU; and
a sending module (2102), configured to send the frame header information and the frame body information of the MPDU in a separation manner to a receive end;
**characterised in that** the separation manner used for the frame header information and the frame body information of the MPDU comprises:
the frame header information and the frame body information of the MPDU are separately carried in different physical layer protocol data units, PPDUs.

6. A data communication apparatus (2200), wherein the apparatus comprises:
a receiving module (2201), configured to receive frame header information and frame body information that are of one or more medium access control protocol data units, MPDUs and that are sent by a transmit end in a separation manner, wherein the frame header information of one MPDU comprises a frame header of the MPDU, the frame body information of the MPDU comprises a frame body of the MPDU, the frame header of the MPDU corresponds to the frame body of the MPDU, and the frame header information of the MPDU comprises first information used to indicate the frame body corresponding to the frame header of the MPDU; and
a processing module (2202), configured to determine, based on the first information in the frame header information of the MPDU, the frame body corresponding to the frame header of the MPDU;
**characterised in that** the separation manner used for the frame header information and the frame body information of the MPDU comprises:
the frame header information and the frame body information of the MPDU are separately carried in different physical layer protocol data units, PPDUs.

7. The apparatus according to claim 5 or claim 6, wherein the first information in the frame header information of the MPDU comprises:
information used to indicate a start location and an end location of the frame body of the MPDU;
information used to indicate a start location and a length of the frame body of the MPDU; or
information used to indicate a length and an end location of the frame body of the MPDU.

8. The apparatus according to any one of claims 5 to 7, wherein the frame body information of the MPDU further comprises second information;
the first information in the frame header information of the MPDU comprises a number ID of the MPDU, and the second information in the frame body information of the MPDU comprises the number ID of the MPDU;
both the first information in the frame header information of the MPDU and the second information in the frame body information of the MPDU comprise a sequence number, a traffic ID, and an association ID; or
the first information in the frame header information of the MPDU comprises an ID of the MPDU, and the second information in the frame body information of the MPDU comprises a result of an exclusive OR operation or a scrambling operation on a preset field by using the ID of the MPDU.

9. A computer program product, wherein when the computer program product is executed by a processor, the processor is enabled to perform the method according to any one of claims 1 to 4.

10. A computer-readable storage medium, wherein the computer-readable storage medium stores a computer program, and when the computer program is executed by a processor, the processor is enabled to perform the method according to any one of claims 1 to 4.

11. A chip, comprising a processing circuit, an input circuit, and an output circuit, wherein the chip is configured to enable an apparatus with the chip installed to implement the method according to any one of claims 1 to 4.

## Patentansprüche

1. Datenübertragungsverfahren, wobei das Verfahren Folgendes umfasst:
Erzeugen (301) von Rahmenkopf-Informationen und Rahmenkörper-Informationen einer oder mehrerer Medienzugriffskontroll-Protokolldateneinheiten (Medium Access Control Protocol Data Units, MPDUs), wobei die Rahmenkopf-Informationen einer MPDU einen Rahmenkopf der MPDU umfassen, die Rahmenkörper-Informationen der MPDU einen Rahmenkörper der MPDU umfassen, der Rahmenkopf der MPDU dem Rahmenkörper der MPDU entspricht und die Rahmenkopf-Informationen der MPDU erste Informationen umfassen, die dazu verwendet werden, den Rahmenkörper anzuzeigen, der dem Rahmenkopf der MPDU entspricht; und
Senden (302) der Rahmenkopf-Informationen und der Rahmenkörper-Informationen der MPDU in einer Trennungsweise an ein Empfangsende;
**dadurch gekennzeichnet, dass**
die für die Rahmenkopf-Informationen und die Rahmenkörper-Informationen der MPDU verwendete Trennungsweise Folgendes umfasst:
die Rahmenkopf-Informationen und die Rahmenkörper-Informationen der MPDU werden getrennt in verschiedenen Protokolldateneinheiten der physischen Schicht (Physical layer Protocol Data Units, PPDUs) geführt.

2. Datenkommunikationsverfahren, wobei das Verfahren Folgendes umfasst:
Empfangen (303) von Rahmenkopf-Informationen und Rahmenkörper-Informationen einer oder mehrerer Medienzugriffskontroll-Protokolldateneinheiten, MPDUs, die durch ein Übertragungsende in einer Trennungsweise gesendet werden, wobei die Rahmenkopf-Informationen einer MPDU einen Rahmenkopf der MPDU umfassen, die Rahmenkörper-Informationen der MPDU einen Rahmenkörper der MPDU umfassen, der Rahmenkopf der MPDU dem Rahmenkörper der MPDU entspricht und die Rahmenkopf-Informationen der MPDU erste Informationen umfassen, die dazu verwendet werden, den Rahmenkörper anzuzeigen, der dem Rahmenkopf der MPDU entspricht; und
Bestimmen (304) des dem Rahmenkopf der MPDU entsprechenden Rahmenkörpers basierend auf den ersten Informationen in den Rahmenkopf-Informationen der MPDU;
**dadurch gekennzeichnet, dass**
die für die Rahmenkopf-Informationen und die Rahmenkörper-Informationen der MPDU verwendete Trennungsweise Folgendes umfasst:
die Rahmenkopf-Informationen und die Rahmenkörper-Informationen der MPDU werden getrennt in verschiedenen Protokolldateneinheiten der physischen Schicht, PPDUs, geführt.

3. Verfahren gemäß Anspruch 1 oder Anspruch 2, wobei die ersten Informationen in den Rahmenkopf-Informationen der MPDU Folgendes umfassen:
Informationen, die verwendet werden, um eine Startstelle und eine Endstelle des Rahmenkörpers der MPDU anzuzeigen;
Informationen, die verwendet werden, um eine Startstelle und eine Länge des Rahmenkörpers der MPDU anzuzeigen; oder
Informationen, die verwendet werden, um eine Länge und eine Endstelle des Rahmenkörpers der MPDU anzuzeigen.

4. Verfahren gemäß einem der Ansprüche 1 bis 3, wobei die Rahmenkörper-Informationen der MPDU ferner zweite Informationen umfassen;
die ersten Informationen in den Rahmenkopf-Informationen der MPDU eine Nummern-ID der MPDU umfassen, und die zweiten Informationen in den Rahmenkörper-Informationen der MPDU die Nummern-ID der MPDU umfassen;
sowohl die ersten Informationen in den Rahmenkopf-Informationen der MPDU als auch die zweiten Informationen in den Rahmenkörper-Informationen der MPDU eine Sequenznummer, eine Verkehrs-ID und eine Zuordnungs-ID umfassen; oder
die ersten Informationen in den Rahmenkopf-Informationen der MPDU eine ID der MPDU umfassen, und die zweiten Informationen in den Rahmenkörper-Informationen der MPDU ein Ergebnis einer exklusiven ODER-Operation oder einer Verwürfelungsoperation an einem voreingestellten Feld unter Verwendung der ID der MPDU umfassen.

5. Datenkommunikationsgerät (2100), wobei das Gerät Folgendes umfasst:
ein Erzeugungsmodul (2101), das dazu konfiguriert ist, Rahmenkopf-Informationen und Rahmenkörper-Informationen einer oder mehrerer Medienzugriffskontroll-Protokolldateneinheiten, MPDUs, zu erzeugen, wobei die Rahmenkopf-Informationen einer MPDU einen Rahmenkopf der MPDU umfassen, die Rahmenkörper-Informationen der MPDU einen Rahmenkörper der MPDU umfassen, der Rahmenkopf der MPDU dem Rahmenkörper der MPDU entspricht und die Rahmenkopf-Informationen der MPDU erste Informationen umfassen, die dazu verwendet werden, den Rahmenkörper anzuzeigen, der dem Rahmenkopf der MPDU entspricht; und
ein Sendemodul (2102), das dazu konfiguriert ist, die Rahmenkopf-Informationen und die Rahmenkörper-Informationen der MPDU in einer Trennungsweise an ein Empfangsende zu senden;
**dadurch gekennzeichnet, dass**
die für die Rahmenkopf-Informationen und die Rahmenkörper-Informationen der MPDU verwendete Trennungsweise Folgendes umfasst:
die Rahmenkopf-Informationen und die Rahmenkörper-Informationen der MPDU werden getrennt in verschiedenen Protokolldateneinheiten der physischen Schicht, PPDUs, geführt.

6. Datenkommunikationsgerät (2200), wobei das Gerät Folgendes umfasst:
ein Empfangsmodul (2201), das dazu konfiguriert ist, Rahmenkopf-Informationen und Rahmenkörper-Informationen einer oder mehrerer Medienzugriffskontroll-Protokolldateneinheiten, MPDUs, zu empfangen, die durch ein Übertragungsende in einer Trennungsweise gesendet werden, wobei die Rahmenkopf-Informationen einer MPDU einen Rahmenkopf der MPDU umfassen, die Rahmenkörper-Informationen der MPDU einen Rahmenkörper der MPDU umfassen, der Rahmenkopf der MPDU dem Rahmenkörper der MPDU entspricht und die Rahmenkopf-Informationen der MPDU erste Informationen umfassen, die dazu verwendet werden, den Rahmenkörper anzuzeigen, der dem Rahmenkopf der MPDU entspricht; und
ein Verarbeitungsmodul (2202), das dazu konfiguriert ist, basierend auf den ersten Informationen in den Rahmenkopf-Informationen der MPDU den Rahmenkörper zu bestimmen, der dem Rahmenkopf der MPDU entspricht;
**dadurch gekennzeichnet, dass**
die für die Rahmenkopf-Informationen und die Rahmenkörper-Informationen der MPDU verwendete Trennungsweise Folgendes umfasst:
die Rahmenkopf-Informationen und die Rahmenkörper-Informationen der MPDU werden getrennt in verschiedenen Protokolldateneinheiten der physischen Schicht, PPDUs, geführt.

7. Gerät gemäß Anspruch 5 oder Anspruch 6, wobei die ersten Informationen in den Rahmenkopf-Informationen der MPDU Folgendes umfassen:
Informationen, die verwendet werden, um eine Startstelle und eine Endstelle des Rahmenkörpers der MPDU anzuzeigen;
Informationen, die verwendet werden, um eine Startstelle und eine Länge des Rahmenkörpers der MPDU anzuzeigen; oder
Informationen, die verwendet werden, um eine Länge und eine Endstelle des Rahmenkörpers der MPDU anzuzeigen.

8. Gerät gemäß einem der Ansprüche 5 bis 7, wobei die Rahmenkörper-Informationen der MPDU ferner zweite Informationen umfassen;
die ersten Informationen in den Rahmenkopf-Informationen der MPDU eine Nummern-ID der MPDU umfassen, und die zweiten Informationen in den Rahmenkörper-Informationen der MPDU die Nummern-ID der MPDU umfassen;
sowohl die ersten Informationen in den Rahmenkopf-Informationen der MPDU als auch die zweiten Informationen in den Rahmenkörper-Informationen der MPDU eine Sequenznummer, eine Verkehrs-ID und eine Zuordnungs-ID umfassen; oder
die ersten Informationen in den Rahmenkopf-Informationen der MPDU eine ID der MPDU umfassen, und die zweiten Informationen in den Rahmenkörper-Informationen der MPDU ein Ergebnis einer exklusiven ODER-Operation oder einer Verwürfelungsoperation an einem voreingestellten Feld unter Verwendung der ID der MPDU umfassen.

9. Computerprogrammprodukt, wobei, wenn das Computerprogrammprodukt durch einen Prozessor ausgeführt wird, der Prozessor in die Lage versetzt wird, das Verfahren gemäß einem der Ansprüche 1 bis 4 durchzuführen.

10. Computerlesbares Speichermedium, wobei das computerlesbare Speichermedium ein Computerprogramm speichert, und, wenn das Computerprogramm durch einen Prozessor ausgeführt wird, der Prozessor in die Lage versetzt wird, das Verfahren gemäß einem der Ansprüche 1 bis 4 durchzuführen.

11. Chip, umfassend eine Verarbeitungsschaltung, eine Eingangsschaltung und eine Ausgangsschaltung, wobei der Chip dazu konfiguriert ist, ein Gerät mit dem installierten Chip in die Lage zu versetzen das Verfahren gemäß einem der Ansprüche 1 bis 4 zu implementieren.

## Revendications

1. Procédé de transmission de données, dans lequel le procédé comprend :
la génération (301) d'informations d'en-tête de trame et d'informations de corps de trame d'une ou plusieurs unités de données de protocole de commande d'accès au support, MPDU, dans lequel les informations d'en-tête de trame d'une MPDU comprennent un en-tête de trame de la MPDU, les informations de corps de trame de la MPDU comprennent un corps de trame de la MPDU, l'en-tête de trame de la MPDU correspond au corps de trame de la MPDU, et les informations d'en-tête de trame de la MPDU comprennent des premières informations utilisées pour indiquer le corps de trame correspondant à l'en-tête de trame de la MPDU ; et
l'envoi (302) des informations d'en-tête de trame et des informations de corps de trame de la MPDU de manière séparée à une extrémité de réception ;
**caractérisé en ce que**
la méthode de séparation utilisée pour les informations d'en-tête de trame et les informations de corps de trame de la MPDU comprend :
les informations d'en-tête de trame et les informations de corps de trame de la MPDU sont transportées séparément dans différentes unités de données de protocole de couche physique, PPDU.

2. Procédé de communication de données, dans lequel le procédé comprend :
la réception (303) d'informations d'en-tête de trame et d'informations de corps de trame qui sont celles d'une ou plusieurs unités de données de protocole de commande d'accès au support, MPDU et qui sont envoyées par une extrémité de transmission de manière séparée, dans lequel les informations d'en-tête de trame d'une MPDU comprennent un en-tête de trame de la MPDU, les informations de corps de trame de la MPDU comprennent un corps de trame de la MPDU, l'en-tête de trame de la MPDU correspond au corps de trame de la MPDU, et les informations d'en-tête de trame de la MPDU comprennent des premières informations utilisées pour indiquer le corps de trame correspondant à l'en-tête de trame de la MPDU ; et
la détermination (304), sur la base des premières informations dans les informations d'en-tête de trame de la MPDU, du corps de trame correspondant à l'en-tête de trame de la MPDU ;
**caractérisé en ce que**
la méthode de séparation utilisée pour les informations d'en-tête de trame et les informations de corps de trame de la MPDU comprend :
les informations d'en-tête de trame et les informations de corps de trame de la MPDU sont transportées séparément dans différentes unités de données de protocole de couche physique, PPDU.

3. Procédé selon la revendication 1 ou la revendication 2, dans lequel les premières informations dans les informations d'en-tête de trame de la MPDU comprend :
des informations utilisées pour indiquer un emplacement de départ et un emplacement de destination du corps de trame de la MPDU ;
des informations utilisées pour indiquer un emplacement de départ et une longueur du corps de trame de la MPDU ; ou
des informations utilisées pour indiquer une longueur et un emplacement de destination du corps de trame de la MPDU.

4. Procédé selon l'une quelconque des revendications 1 à 3, dans lequel les informations de corps de trame de la MPDU comprennent également des secondes informations ;
les premières informations dans les informations d'en-tête de trame de la MPDU comprennent un numéro d'identification de la MPDU, et les secondes informations dans les informations de corps de trame de la MPDU comprennent le numéro d'identification de la MPDU ;
les premières informations dans les informations d'en-tête de trame de la MPDU et les secondes informations dans les informations de corps de trame de la MPDU comprennent un numéro de séquence, un identifiant de trafic, et un identifiant d'association ; ou
les premières informations dans les informations d'en-tête de trame de la MPDU comprennent un identifiant de la MPDU, et les secondes informations dans les informations de corps de trame de la MPDU comprennent un résultat d'une opération OU exclusif ou d'une opération de brouillage sur un champ prédéfini à l'aide de l'identifiant de la MPDU.

5. Appareil de communication de données (2100), dans lequel l'appareil comprend :
un module de génération (2101), configuré pour générer des informations d'en-tête de trame et des informations de corps de trame d'une ou plusieurs unités de données de protocole de commande d'accès au support, MPDU, dans lequel les informations d'en-tête de trame d'une MPDU comprennent un en-tête de trame de la MPDU, les informations de corps de trame de la MPDU comprennent un corps de trame de la MPDU, l'en-tête de trame de la MPDU correspond au corps de trame de la MPDU, et les informations d'en-tête de trame de la MPDU comprennent des premières informations utilisées pour indiquer le corps de trame correspondant à l'en-tête de trame de la MPDU ; et
un module d'envoi (2102), configuré pour envoyer les informations d'en-tête de trame et les informations de corps de trame de la MPDU de manière séparée à une extrémité de réception ;
**caractérisé en ce que**
la méthode de séparation utilisée pour les informations d'en-tête de trame et les informations de corps de trame de la MPDU comprend :
les informations d'en-tête de trame et les informations de corps de trame de la MPDU sont transportées séparément dans différentes unités de données de protocole de couche physique, PPDU.

6. Appareil de communication de données (2200), dans lequel l'appareil comprend :
un module de réception (2201), configuré pour recevoir des informations d'en-tête de trame et des informations de corps de trame qui sont celles d'une ou plusieurs unités de données de protocole de commande d'accès au support, MPDU et qui sont envoyées par une extrémité de transmission de manière séparée, dans lequel les informations d'en-tête de trame d'une MPDU comprennent un en-tête de trame de la MPDU, les informations de corps de trame de la MPDU comprennent un corps de trame de la MPDU, l'en-tête de trame de la MPDU correspond au corps de trame de la MPDU, et les informations d'en-tête de trame de la MPDU comprennent des premières informations utilisées pour indiquer le corps de trame correspondant à l'en-tête de trame de la MPDU ; et
un module de traitement (2202), configuré pour déterminer, sur la base des premières informations dans les informations d'en-tête de trame de la MPDU, le corps de trame correspondant à l'en-tête de trame de la MPDU ;
**caractérisé en ce que**
la méthode de séparation utilisée pour les informations d'en-tête de trame et les informations de corps de trame de la MPDU comprend :
les informations d'en-tête de trame et les informations de corps de trame de la MPDU sont transportées séparément dans différentes unités de données de protocole de couche physique, PPDU.

7. Appareil selon la revendication 5 ou la revendication 6, dans lequel les premières informations dans les informations d'en-tête de trame de la MPDU comprend :
des informations utilisées pour indiquer un emplacement de départ et un emplacement de destination du corps de trame de la MPDU ;
des informations utilisées pour indiquer un emplacement de départ et une longueur du corps de trame de la MPDU ; ou
des informations utilisées pour indiquer une longueur et un emplacement de destination du corps de trame de la MPDU.

8. Appareil selon l'une quelconque des revendications 5 à 7, dans lequel les informations de corps de trame de la MPDU comprennent également des secondes informations ;
les premières informations dans les informations d'en-tête de trame de la MPDU comprennent un numéro d'identification de la MPDU, et les secondes informations dans les informations de corps de trame de la MPDU comprennent le numéro d'identification de la MPDU ;
les premières informations dans les informations d'en-tête de trame de la MPDU et les secondes informations dans les informations de corps de trame de la MPDU comprennent un numéro de séquence, un identifiant de trafic, et un identifiant d'association ; ou
les premières informations dans les informations d'en-tête de trame de la MPDU comprennent un identifiant de la MPDU, et les secondes informations dans les informations de corps de trame de la MPDU comprennent un résultat d'une opération OU exclusif ou d'une opération de brouillage sur un champ prédéfini à l'aide de l'identifiant de la MPDU.

9. Produit de programme informatique, dans lequel lorsque le produit de programme informatique est exécuté par un processeur, le processeur est activé pour réaliser le procédé selon l'une quelconque des revendications 1 à 4.

10. Support de stockage lisible par ordinateur, dans lequel le support de stockage lisible par ordinateur stocke un programme informatique, et lorsque le programme informatique est exécuté par un processeur, le processeur est activé pour réaliser le procédé selon l'une quelconque des revendications 1 à 4.

11. Puce, comprenant un circuit de traitement, un circuit d'entrée, et un circuit de sortie, dans laquelle la puce est configurée pour activer un appareil sur lequel la puce est installée pour mettre en œuvre le procédé selon l'une quelconque des revendications 1 à 4.
